# EUROPEAN PATENT SPECIFICATION

(11) **EP 4 080 488 B1**
(45) Date of publication and mention of the grant of the patent: **28.02.2024**
(21) Application number: 19956189.5
(22) Date of filing: 19.12.2019
(51) Int. Cl.: G06F 7/58, G09C 1/00, H04L 9/08

(54) **SECRET RANDOM NUMBER GENERATION SYSTEM, SECRET CALCULATION DEVICE, SECRET RANDOM NUMBER GENERATION METHOD, AND PROGRAM**
SYSTEM ZUR ERZEUGUNG GEHEIMER ZUFALLSZAHLEN, VORRICHTUNG ZUR ERZEUGUNG GEHEIMER ZUFALLSZAHLEN; VERFAHREN ZUR ERZEUGUNG GEHEIMER ZUFALLSZAHLEN UND PROGRAMM
SYSTÈME DE GÉNÉRATION DE NOMBRES ALÉATOIRES SECRETS, DISPOSITIF DE CALCUL SECRET, PROCÉDÉ DE GÉNÉRATION DE NOMBRES ALÉATOIRES SECRETS, ET PROGRAMME

(43) Date of publication of application: 26.10.2022
(73) Proprietor: Nippon Telegraph And Telephone Corporation, Chiyoda-ku Tokyo 100-8116 (JP)
(72) Inventor: ICHIKAWA, Atsunori, Musashino-shi, Tokyo 180-8585 (JP)
(74) Representative: MERH-IP Matias Erny Reichl Hoffmann Patentanwälte PartG mbB
(86) International application number: PCT/JP2019/049883
(87) International publication number: WO 2021/124520

(56) References cited:
- US-A1- 2007 083 493
- US-A1- 2007 083 493
- US-A1- 2018 115 415
- CYNTHIA DWORK ET AL: "Our Data, Ourselves: Privacy Via Distributed Noise Generation", 1 January 2006 (2006-01-01), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 486 - 503, XP019034092, ISBN: 978-3-540-74549-5 * section 3 *
- DAHL, MORTEN et al.: "Private Data Aggregation on a Budget", Cryptology ePrint Archive: Report 2017 / 643, 2017, pages 1-36, XP061023771, Retrieved from the Internet: URL:https://eprint.iacr.org/2017/643 [retrieved on 2020-07-30]

## Description

### [Technical Field]

The present invention relates to a secure computation technique and a privacy protection technique.

### [Background Art]

Recently, demands for utilizing privacy data represented by private information have been increasing, and a secure computation technique for enabling various calculations while information is kept secret attracts attention. The secure computation is a useful technique that can be applied to various applications (e.g., refer to NPL 1). However, because the accuracy (correctness) of calculation results is ensured in the secure computation, the privacy of calculation results, which is called as "output privacy", is not protected. Mixing of a calculation result using random noise, for example, is needed in order to protect the output privacy, and in the secure computation as well, such mixing, that is, generation of random noise is one technical issue.

For such an issue, a method of generating secret random noise following a binomial distribution using the secure computation is disclosed in NPL 2. Noise that follows the binomial distribution is used for satisfying an output privacy protection standard called differential privacy, and therefore the technique disclosed in NPL 2 can be said as a useful technique for achieving the output privacy protection in the secure computation.
US 2018/115415 A1 discloses an example of a multi-party random number generation.

### [Citation List]

### [Non Patent Literature]

[NPL 1] Naoto Kiribuchi, Dai Ikarashi, Koki Hamada, Ryo Kikuchi, "MEVAL3: A Library for Programmable Secure Computation", Symposium on Cryptography and Information Security (SCIS), 2018.
[NPL 2] C. Dwork, K, Kenthapadi, F. McSherry, I. Mironov, M. Naor, "Our data, ourselves: privacy via distributed noise generation," Advances in Cryptology, EUROCRYPT, LNCS 4004, pp. 486-503, 2006.

### [Summary of the Invention]

### [Technical Problem]

However, there is a problem regarding NPL 2 in that a communication amount according to the noise range is needed when noise is generated. The noise range drastically increases depending on the range of a calculation result to be protected and the protection strength, and therefore, in order to achieve the sufficient protection strength regarding any computation, quite a large communication amount corresponding to the increased noise range is needed. The reduction of this communication amount is a big issue from a viewpoint of speeding up the secure computation.

The present invention has been made in view of the technical issue described above, and an object of the present invention is to generate a secure random number that follows a binomial distribution without performing successive communication.

### [Means for Solving the Problem]

In order to achieve the above-described object, a secure random number generation system according to one aspect of the invention is a secure random number generation system that includes a plurality of secure computation apparatuses and generates a concealed value of a random number that follows a binomial distribution, wherein the secure computation apparatuses each include: a storage unit configured to store a pseudorandom function and at least one set of a key and a polynomial; a pseudorandom number generating unit configured to obtain a pseudorandom number for each of the keys by computing the pseudorandom function using the keys; a bit counting unit configured to count the number of 1s included in each pseudorandom number; and a random number share generating unit configured to obtain the sum of products of the number of 1s and an output of the polynomial corresponding to the number of 1s as the share of the random number.

### [Effects of the Invention]

According to the present invention, a secure random number that follows a binomial distribution can be generated without performing successive communication. As a result of performing mixing of a calculation result using this secure random number, the output privacy in the secure computation can be efficiently protected.

### [Brief Description of Drawings]

[Fig. 1]

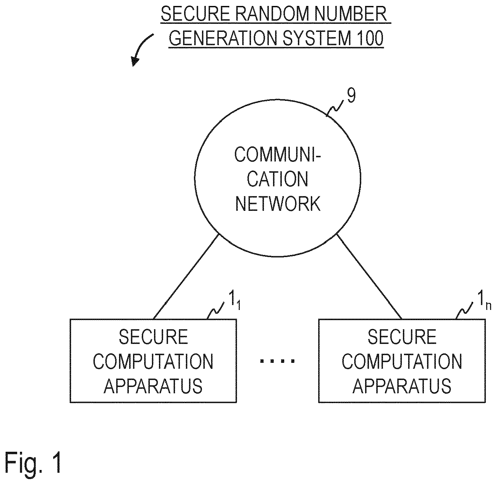

   FIG. 1 is a diagram illustrating a functional configuration of a secure random number generation system.
[Fig. 2]

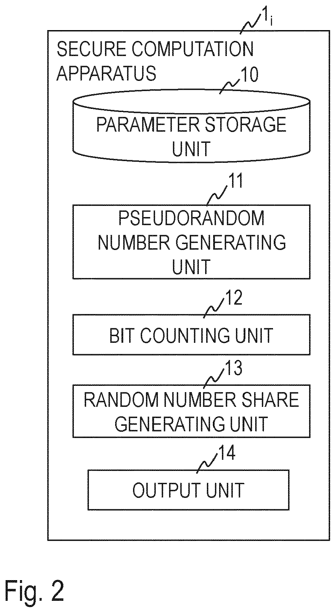

   Fig. 2 is a diagram illustrating a functional configuration of a secure computation apparatus.
[Fig. 3]

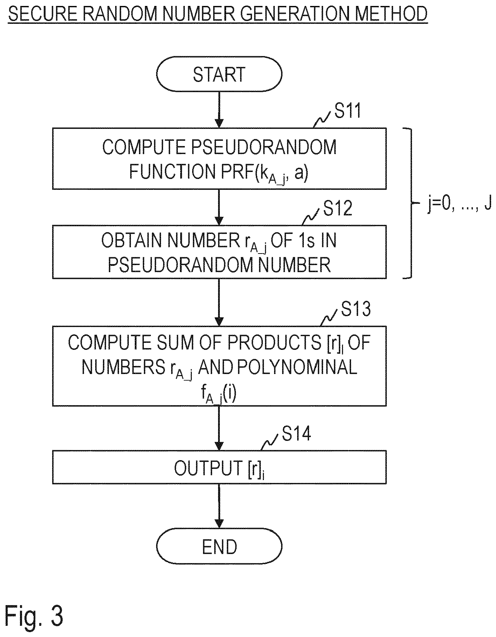

   Fig. 3 is a diagram illustrating a processing procedure of a secure random number generation method.
[Fig. 4]

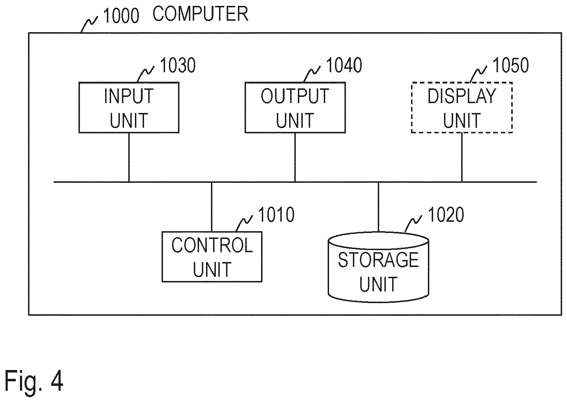

   FIG. 4 is a diagram illustrating a functional configuration of a computer.

### [Description of Embodiments]

In this specification, "_" (underscore) in a subscript represents that a character on the right side is added to a character on the left side as a subscript. That is, "a_{b_c}" represents that b_{c} is added to a as a subscript.

First, the existing technologies on which the present invention is premised will be described.

### Shamir's secret sharing method

Shamir's secret sharing method is a method in which a secret value s is broken up into n fragments by a random polynomial f, and the secret value s is restored from any t fragments (refer to Reference Literature 1, for example). Hereinafter, one fragment obtained by breaking up a certain value is called as a "share", and a set of all shares is called as a "concealed value". The concealed value of a certain value • is represented by [•], and the i^{th} share of the concealed value [•] is represented by [•]ᵢ. Note that n is an integer of 3 or more, and t is an integer that satisfies n≥2t-1.

[Reference Literature 1] A. Shamir, "How to share a secret," Communications of the ACM, Vol. 22, No. 11, pp. 612-613, 1979.

In the Shamir's secret sharing method, first, with respect to a secret s on a finite field Zₚ with order p, a t-1^{th} order polynomial f(x) =rₜ₋₁x^{t-1}+...+r₁x¹+s on the finite field Zₚ is selected. Note that rᵢ is a random value on the finite field Zₚ. Here, each of shares [s]₁, ..., [s]ₙ of the secret s is obtained as [s]ᵢ=f(i), for example. When the secret s is restored, the constant term s of the polynomial f(x) is obtained by performing polynomial interpolation using any t or more shares that do not duplicate.

### Pseudorandom secret sharing

The pseudorandom secret sharing is a method for generating a share of a uniform random number using a pseudorandom function without performing communication (refer to Reference Literature 2, for example).

### Reference literature 2

R. Cramer, I. Damgard, and Y. Ishai, "Share conversion, pseudorandom secret-sharing and applications to secure computation," Theory of Cryptography, LNCS 3378, pp. 342-362, 2005.

A pseudorandom function PRF: K×{0, 1}^{α}→Zₚ is a function for outputting a random number on an (approximately) uniform finite field Zₚ by receiving a private key and a bit stream of length α. Here, K represents a keyspace. Also, consider a case where shares in the Shamir's secret sharing method are retained by n parties P₁, ..., Pₙ in a broken up manner. Here, the shares [r]₁, ..., [r]ₙ of a random number r are retained by n parties in a manner described below.
1. First, the key of the pseudorandom function is shared by some parties, in advance. Specifically, a set A is defined as a set constituted by n-t+1 parties selected from the n parties, and the key k_{A}∈K is shared by all of the n-t+1 parties included in the set A. Conversely, t-1 parties that are not included in the set A do not obtain information regarding the key k_{A}. Similarly, with respect to each set A that can be envisioned, all parties included in the envisioned set A shares a different key k_{A}. Also, separately, with respect to each of all of the sets A, a t^{th} order polynomial f_{A} corresponding to the set A is shared. Here, assume that a condition that f_{A}(0)=1 and f_{A}(i)=0 (if Pᵢ is not included in set A) is satisfied.
2. When a random number needs to be generated, each party generates a pseudorandom number with a value a such as a time stamp that is used in common. Specifically, when parties Pᵢ are included in a set Aⱼ and retain a key set {k_{A_j}}, each party Pᵢ computes [r]ᵢ←∑ⱼPRF(k_{A_j}, a) •f_{A_j}(i). Here, J is the number of sets A to which the party Pᵢ belongs, and j indicates an integer from 1 to j.

The share [r]ᵢ to be obtained by the party Pᵢ with the processing described above is a share of a pseudorandom number r=∑_{A}PRF(k_{A}, a).

### Binomial distribution

The number of 1s included in L-bit uniform random number r∈{0, 1}^{L} is known to be a random number that follows a binomial distribution Bin(L, 1/2). If a pseudorandom function PRF: K×{0, 1}^{α}→{0, 1}^{L} has sufficient uniformity, the number of 1s included in the pseudorandom number PRF(k, a) can also be said to similarly follow the binomial distribution Bin(L, 1/2) .

### Embodiment

Here, an embodiment of the present invention will be described in detail. Note that the same reference numerals are added to constituent units that have the same function, in the drawings, and redundant description will be omitted.

In the secure random number generation system of the embodiment, N (≥3) secure computation apparatus computes, in a cooperated manner, a concealed value of a random value that follows the binomial distribution. In the present embodiment, it is premised on that a multi-party computation based on the Shamir's secret sharing method is used.

A secure random number generation system 100 of the embodiment includes n (≥3) secure computation apparatuses 1₁, ..., 1ₙ, as shown in Fig. 1, for example. In the present embodiment, the secure computation apparatuses 1₁, ..., 1ₙ are connected to a communication network 9. The communication network 9 is a communication network of a circuit switching system or a packet exchange system that is configured such that connected apparatuses can communicate to each other, and the Internet, LAN (Local Area Network), WAN (Wide Area Network), or the like can be used. Note that the apparatuses need not communicate on-line via the communication network 9. For example, the configuration may be such that information to be input to the secure computation apparatuses 1₁, ..., 1ₙ is stored in a portable recording medium such as a magnetic tape or a USB memory, and the information is input off-line from the portable recording medium to the secure computation apparatuses 1₁, ..., 1ₙ, for example.

The secure computation apparatus 1ᵢ (i=1, ..., n) included in the secure random number generation system 100 of the embodiment includes a parameter storage unit 10, a pseudorandom number generating unit 11, a bit counting unit 12, a random number share generating unit 13, and an output unit 14, as shown in Fig. 2, for example. The secure random number generation method of the present embodiment is realized by the secure computation apparatus 1ᵢ (i=1, ..., n) performing the processing in the steps to be described later while cooperating with another secure computation apparatus 1ⱼ (j=1, ..., n, where i≠j).

The secure computation apparatus 1ᵢ is a special apparatus that is configured by a special program being read in a known or dedicated computer including a central processing unit (CPU), a main storage device (RAM: Random Access Memory), and the like, for example. The secure computation apparatus 1ᵢ executes the processing under the control of the central processing unit, for example. The data input to the secure computation apparatus 1ᵢ and the data obtained by the processing are stored in the main storage device, for example, and the data stored in the main storage device is read out to the central processing unit as necessary and is used for another processing. At least some of the processing units of the secure computation apparatus 1ᵢ may be configured by hardware such as an integrated circuit. The storage units included in the secure computation apparatus 1ᵢ can be configured by a main storage device such as RAM (Random Access Memory), an auxiliary storage device such as a hard disk, an optical disk, or a semiconductor memory device such as a flash memory, or middleware such as a relational database or key-value store, for example.

In the following, the processing procedure of the secure random number generation method to be executed by the secure random number generation system 100 of the embodiment will be described with reference to Fig. 3.

The parameter storage unit 10 stores the pseudorandom function PRF: K×{0, 1}^{α}→{0, 1}^{L}, J keys {k_{A_1}, ..., k_{A_J}}, and k polynomials {f_{A_1}(x), ..., f_{A_J}(x)}.

In step S11, the pseudorandom number generating unit 11 computes, for each integer j of 1 or more and J or less, a pseudorandom function PRF(k_{A_j}, a) using a key k_{A_j} and a parameter a that are stored in the parameter storage unit 10. The parameter a is a parameter, such as a time stamp, that can be used in common between all the secure computation apparatuses 1₁, ..., 1ₙ. The pseudorandom number generating unit 11 outputs pseudorandom numbers p_{A_j} calculated from keys k_{A_j} to the bit counting unit 12.

In step S12, the bit counting unit 12 obtains the number r_{A_j} of 1s included in the pseudorandom number p_{A_j} for each integer j of 1 or more and J or less. The bit counting unit 12 output the numbers r_{A_j} of 1s obtained from the pseudorandom numbers p_{A_j} to the random number share generating unit 13.

In step S13, the random number share generating unit 13 computes a sum of products [r]ᵢ←∑ⱼr_{A_j}•f_{A_j}(i) of the numbers r_{A_j} of 1s and the outputs of polynomial f_{A_j}(i). Here, i is the number of the secure computation apparatus. This [r]ᵢ is a share of the random number r=∑_{A}r_{A}. The random number share generating unit 13 outputs the share [r]ᵢ of a random number r to the output unit 14.

In step S14, the output unit 14 outputs the share [r]ᵢ of the random number r.

The number r_{A} of 1s included in an L-bit pseudorandom number p_{A}, which is an output of the pseudorandom function PRF(k_{A}, a), follows a binomial distribution Bin(L, 1/2). Similarly, the number r of 1s included in a total N=(nCn-t+1)×L-bit random number computed by all the keys k_{A} that are shared by the parties follows the binomial distribution Bin(N, 1/2). Here, nCn-t+1 represents the number of combinations of selecting different n-t+1 pieces from different n pieces. This number r of 1s satisfies r=∑_{A}r_{A}. Also, these computations can be locally performed, and therefore communication between parties is not needed. The present invention provides a technique in which, by utilizing this property, each party obtains the share [r]ᵢ of a random number that follows a binomial distribution Bin(N, 1/2) without the parties communicating to each other, and the concealed value [r] of a random number r is generated as an entire system.

In the present invention, the need of successive communication is eliminated when a secure random number is generated, based on the pseudorandom secret sharing method. Here, as a result of changing the pseudorandom secret sharing method for generating a uniform random number such that a random number that follows a binomial distribution can be generated, the communication amount is largely reduced relative to that of a known method. As described above, according to the present invention, a secure random number that follows a binomial distribution and can be used for output privacy protection of a secure computation result and the like can be generated without performing successive communication. In the known method, communication of an amount that is in proportion to a noise range N is needed every time a secure random number is generated.

Although an embodiment of the present invention have been described above, a specific configuration is not limited to the embodiment. The various kinds of processing described in the embodiment are not necessarily executed in chronological order according to the order of descriptions, and may be parallelly or individually executed depending on the processing capabilities of the device that executes the processing or according to the need.

### Program and Recording Medium

When the various processing functions of the devices described in the above embodiment are realized using a computer, the functions that the devices need to have are to be described in the form of a program. Then, this program is read in a storage unit 1020 of a computer shown in Fig. 4, and a control unit 1010, an input unit 1030, an output unit 1040 are caused to operate, and as a result, the various processing functions of the above devices are realized on the computer.

The program that describes the contents of such processing can be recorded in a computer-readable recording medium. Any kind of computer-readable recording medium may be employed, such as a magnetic recording device, an optical disc, a magneto-optical recording medium, or a semiconductor memory.

The program is distributed by, for example, selling, transferring, or lending a portable recording medium such as a DVD or a CD-ROM on which the program is recorded. Furthermore, it is possible to employ a configuration in which the program is stored in a storage device of a server computer, and the program is distributed by the server computer transferring the program to other computers via a network.

A computer that executes such a program first stores, in a storage device thereof, the program that is recorded on a portable recording medium or that has been transferred from a server computer. Thereafter, when executing processing, the computer reads the program stored in the storage device thereof, and executes processing according to the program thus read. In another mode of execution of the program, the computer may read the program directly from a portable recording medium and execute processing according to the program. In addition, the computer may sequentially execute processing according to the received program every time the computer receives the program transferred from a server computer. Also, it is possible to employ a configuration for executing the above-described processing by using a so-called ASP (Application Service Provider) type service, which does not transfer a program from the server computer to the computer, but realizes processing functions by only making instructions to execute the program and acquiring the results. The program according to the embodiments may be information that is used by an electronic computer to perform processing, and that is similar to a program (e.g. data that is not a direct command to the computer, but has the property of defining computer processing).

Also, although the device is formed by running a predetermined program on a computer in the embodiment, at least part of the content of the above processing may be realized using hardware.

## Claims

1. A secure random number generation system (100) including a plurality of secure computation apparatuses and generating a concealed value of a random number, the random number following a binomial distribution,
the secure computation apparatuses (1₁, ..., 1ₙ) each comprising:
a storage unit (10) adapted to store a pseudorandom function and at least one set of a key and a plurality of polynomials;
a pseudorandom number generating unit (11) adapted to obtain a pseudorandom number for each of the keys by computing the pseudorandom function using the key;
a bit counting unit (12) adapted to count the number of 1s included in each pseudorandom number; and
a random number share generating unit (13) adapted to obtain the sum of products of the number of 1s and an output of the polynomial corresponding to the number of 1s as a share of the random number,
an output unit (14) adapted to output the share of the random number, wherein the set of all output shares is the concealed value.

2. A secure computation apparatus being used in a secure random number generation system (100) according to claim 1, the secure random number generation system generating a concealed value of a random number, the random number following a binomial distribution, the secure computation apparatus comprising:
a storage unit (10) adapted to store a pseudorandom function and at least one set of a key and a plurality of polynomials;
a pseudorandom number generating unit (11) adapted to obtain a pseudorandom number for each of the keys by computing the pseudorandom function using the key;
a bit counting unit (12) adapted to count the number of 1s included in each pseudorandom number; and
a random number share generating unit (13) adapted to obtain the sum of products of the number of 1s and an output of the polynomial corresponding to the number of 1s as a share of the randomnumber,
an output unit (14) adapted to output the share of the random number, wherein the set of all output shares is the concealed value.

3. A secure random number generation method to be executed by a secure random number generation system (100) including a plurality of secure computation apparatuses (1₁, ..., 1ₙ), the secure random number generation system generating a concealed value of a random number, the random number following a binomial distribution,
wherein, a pseudorandom function and at least one set of a key and a plurality of polynomials are stored in a storage unit (10) of the each of the secure computation apparatuses,
the secure random number generation method comprises:
obtaining, by a pseudorandom number generating unit (11) of the each of the secure computation apparatuses, a pseudorandom number for each of the keys by computing the pseudorandom function using the key;
counting, by a bit counting unit (12) of the each of the secure computation apparatuses, the number of 1s included in each pseudorandom number; and
obtaining, by a random number share generating unit (13) of the each of the secure computation apparatuses, the sum of products of the number of 1s and an output of the polynomial corresponding to the number of 1s as a share of the random number,
outputting the share of the random number, wherein the set of all output shares is the concealed value.

4. A program for causing a computer to function as the secure computation apparatus according to claim 2.

## Patentansprüche

1. System (100) zum Generieren sicherer Zufallszahlen, das eine Mehrzahl von Vorrichtungen zur sicheren Berechnung umfasst und einen verborgenen Wert einer Zufallszahl generiert, wobei die Zufallszahl einer Binomialverteilung folgt,
wobei die Vorrichtungen (1₁, ..., 1ₙ) zur sicheren Berechnung jeweils umfassen:
eine Speichereinheit (10), die dazu ausgelegt ist, eine Pseudozufallsfunktion und mindestens einen Satz aus einem Schlüssel und einer Mehrzahl von Polynomen zu speichern,
eine Pseudozufallszahlen-Generierungseinheit (11), die dazu ausgelegt ist, für jeden der Schlüssel eine Pseudozufallszahl zu erlangen, indem die Pseudozufallsfunktion unter Verwendung des Schlüssels berechnet wird,
eine Bitzähleinheit (12), die dazu ausgelegt ist, die Anzahl von 1en zu zählen, die in jeder Pseudozufallszahl aufgenommen sind, und
eine Zufallszahlenanteil-Generierungseinheit (13), die dazu ausgelegt ist, die Summe von Produkten der Anzahl von 1en und einer Ausgabe des Polynoms, das der Anzahl von 1en entspricht, als einen Anteil der Zufallszahl zu erlangen,
eine Ausgabeeinheit (14), die dazu ausgelegt ist, den Anteil der Zufallszahl auszugeben, wobei der Satz aller Ausgabeanteile der verborgene Wert ist.

2. Vorrichtung zur sicherer Berechnung, die in einem System (100) zum Generieren sicherer Zufallszahlen nach Anspruch 1 verwendet wird, wobei das System zum Generieren sicherer Zufallszahlen einen verborgenen Wert einer Zufallszahl generiert, wobei die Zufallszahl einer Binomialverteilung folgt, wobei die Vorrichtung zur sicheren Berechnung umfasst:
eine Speichereinheit (10), die dazu ausgelegt ist, eine Pseudozufallsfunktion und mindestens einen Satz aus einem Schlüssel und einer Mehrzahl von Polynomen zu speichern,
eine Pseudozufallszahlen-Generierungseinheit (11), die dazu ausgelegt ist, für jeden der Schlüssel eine Pseudozufallszahl zu erlangen, indem die Pseudozufallsfunktion unter Verwendung des Schlüssels berechnet wird,
eine Bitzähleinheit (12), die dazu ausgelegt ist, die Anzahl von 1en zu zählen, die in jeder Pseudozufallszahl aufgenommen sind, und
eine Zufallszahlenanteil-Generierungseinheit (13), die dazu ausgelegt ist, die Summe von Produkten der Anzahl von 1en und einer Ausgabe des Polynoms, das der Anzahl von 1en entspricht, als einen Anteil der Zufallszahl zu erlangen,
eine Ausgabeeinheit (14), die dazu ausgelegt ist, den Anteil der Zufallszahl auszugeben, wobei der Satz aller Ausgabeanteile der verborgene Wert ist.

3. Verfahren zum Generieren sicherer Zufallszahlen, das durch ein System (100) zum Generieren sicherer Zufallszahlen ausgeführt wird, welches eine Mehrzahl von Vorrichtungen (1₁, .., 1ₙ) zur sicheren Berechnung umfasst, wobei das System zum Generieren sicherer Zufallszahlen einen verborgenen Wert einer Zufallszahl generiert, wobei die Zufallszahl einer Binomialverteilung folgt,
wobei eine Pseudozufallsfunktion und mindestens ein Satz aus einem Schlüssel und einer Mehrzahl von Polynomen in einer Speichereinheit (10) jeder der Vorrichtungen zur sicheren Berechnung gespeichert sind,
wobei das Verfahren zum Generieren sicherer Zufallszahlen umfasst:
Erlangen, durch eine Pseudozufallszahlen-Generierungseinheit (11) jeder der Vorrichtungen zur sicheren Berechnung, für jeden der Schlüssel, einer Pseudozufallszahl, indem die Pseudozufallsfunktion unter Verwendung des Schlüssels berechnet wird,
Berechnen, durch eine Bitzähleinheit (12) jeder der Vorrichtungen zur sicheren Berechnung, der Anzahl von 1en, die in jeder Pseudozufallszahl aufgenommen sind, und
Erlagen, durch eine Zufallszahlenanteil-Generierungseinheit (13) jeder der Vorrichtungen zur sicheren Berechnung, der Summe von Produkten der Anzahl von 1en und einer Ausgabe des Polynoms, das der Anzahl von 1en entspricht, als einen Anteil der Zufallszahl,
Ausgeben des Anteils der Zufallszahl, wobei der Satz aller Ausgabeanteile der verborgene Wert ist.

4. Programm zum Veranlassen eines Computers zum Funktionieren als die Vorrichtung zur sicheren Berechnung nach Anspruch 2.

## Revendications

1. Système de génération de nombre aléatoire sécurisé (100) incluant une pluralité d'appareils de calcul sécurisé et générant une valeur dissimulée d'un nombre aléatoire, le nombre aléatoire suivant une distribution binomiale,
les appareils de calcul sécurisé (1₁, ..., 1ₙ) comprenant chacun :
une unité de stockage (10) apte à stocker une fonction pseudo-aléatoire et au moins un ensemble d'une clé et d'une pluralité de polynômes ;
une unité de génération de nombre pseudo-aléatoire (11) apte à obtenir un nombre pseudo-aléatoire pour chacune des clés par le calcul de la fonction pseudo-aléatoire en utilisant la clé ;
une unité de comptage de bits (12) apte à compter le nombre de 1 inclus dans chaque nombre pseudo-aléatoire ; et
une unité de génération de partage de nombre pseudo-aléatoire (13) apte à obtenir la somme de produits du nombre de 1 et d'une sortie du polynôme correspondant au nombre de 1 en tant qu'un partage du nombre aléatoire,
une unité de sortie (14) apte à délivrer le partage du nombre aléatoire, dans lequel l'ensemble de tous les partages de sortie est la valeur dissimulée.

2. Appareil de calcul sécurisé étant utilisé dans un système de génération de nombre aléatoire sécurisé (100) selon la revendication 1, le système de génération de nombre aléatoire sécurisé générant une valeur dissimulée d'un nombre aléatoire, le nombre aléatoire suivant une distribution binomiale, l'appareil de calcul sécurisé comprenant :
une unité de stockage (10) apte à stocker une fonction pseudo-aléatoire et au moins un ensemble d'une clé et d'une pluralité de polynômes ;
une unité de génération de nombre pseudo-aléatoire (11) apte à obtenir un nombre pseudo-aléatoire pour chacune des clés par le calcul de la fonction pseudo-aléatoire en utilisant la clé ;
une unité de comptage de bits (12) apte à compter le nombre de 1 inclus dans chaque nombre pseudo-aléatoire ; et
une unité de génération de partage de nombre pseudo-aléatoire (13) apte à obtenir la somme de produits du nombre de 1 et d'une sortie du polynôme correspondant au nombre de 1 en tant qu'un partage du nombre aléatoire,
une unité de sortie (14) apte à délivrer le partage du nombre aléatoire, dans lequel l'ensemble de tous les partages de sortie est la valeur dissimulée.

3. Procédé de génération de nombre aléatoire sécurisé à exécuter par un système de génération de nombre aléatoire sécurisé (100) incluant une pluralité d'appareils de calcul sécurisé (1₁, ..., 1ₙ), le système de génération de nombre aléatoire sécurisé générant une valeur dissimulée d'un nombre aléatoire, le nombre aléatoire suivant une distribution binomiale,
dans lequel une fonction pseudo-aléatoire et au moins un ensemble d'une clé et d'une pluralité de polynômes sont stockés dans une unité de stockage (10) du chacun des appareils de calcul sécurisé,
le procédé de génération de nombre aléatoire sécurisé comprend :
l'obtention, par une unité de génération de nombre pseudo-aléatoire (11) du chacun des appareils de calcul sécurisé, d'un nombre pseudo-aléatoire pour chacune des clés par le calcul de la fonction pseudo-aléatoire en utilisant la clé ;
le comptage, par une unité de comptage de bits (12) du chacun des appareils de calcul sécurisé, du nombre de 1 inclus dans chaque nombre pseudo-aléatoire ; et
l'obtention, par une unité de génération de partage de nombre pseudo-aléatoire (13) du chacun des appareils de calcul sécurisé, de la somme de produits du nombre de 1 et d'une sortie du polynôme correspondant au nombre de 1 en tant qu'un partage du nombre aléatoire,
la délivrance du partage du nombre aléatoire, dans lequel l'ensemble de tous les partages de sortie est la valeur dissimulée.

4. Programme pour amener un ordinateur à fonctionner en tant que l'appareil de calcul sécurisé selon la revendication 2.
